# EUROPEAN PATENT APPLICATION

(11) **EP 4 503 829 A1**
(43) Date of publication of application: **05.02.2025**
(21) Application number: 22933973.4
(22) Date of filing: 28.03.2022
(51) Int. Cl.: H04W 74/08

(54) **SIDELINK COMMUNICATION METHOD AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/083493
(87) International publication number: WO 2023/184116

(57) **Abstract**

The embodiments of the present disclosure belong to the technical field of communications. Disclosed are a sidelink communication method and apparatus. The sidelink communication method is applied to a terminal device, and comprises: determining whether a continuous LBT failure is triggered on a sidelink sending resource of a shared frequency; and when the continuous LBT failure is triggered, reporting a failure indication to a network device or determining a backup sidelink sending resource, so as to send a sidelink message. Therefore, a terminal device can send data in a timely manner when LBT fails, thus avoiding data loss and increasing the communication reliability.

## Description

### TECHNICAL FIELD

The present disclosure relates to the technical field of communications, and in particular to a sidelink communication method and apparatus.

### BACKGROUND

At present, in order to support a direct communication between a user equipment (UE) and another UE, a sidelink communication mode is introduced, and an interface between the UEs is PC-5.

The UE needs to perform listen before talk (LBT) when conducting a sidelink transmission on a sidelink sending resource of a shared frequency, which may lead to a LBT failure. If the LBT failure occurs, the UE continues to wait, which may lead to a data sending delay and even data loss.

### SUMMARY

In a first aspect of embodiments of the present disclosure, a sidelink communication method is provided. The method is executed by a terminal, and includes: determining whether a continuous LBT failure is triggered on a sidelink sending resource of a shared frequency; and in response to the continuous LBT failure being triggered, reporting a failure indication to a network device or determining a backup sidelink sending resource for sending a sidelink message.

In this technical solution, the terminal determines whether the continuous LBT failure is triggered on the sidelink sending resource of the shared frequency; and when the continuous LBT failure is triggered, the failure indication is reported to the network device or the backup sidelink sending resource for sending the sidelink message is determined. Therefore, the terminal can send data in a timely manner when the LBT failure occurs, thus avoiding data loss and increasing communication reliability.

In a second aspect of the embodiments of the present disclosure, another sidelink communication method is provided. The sidelink communication method is performed by a network device, and includes: sending a first message to a terminal, in which the first message carries a specified timer and a specified number threshold, and is used for determining whether a continuous LBT failure is triggered on a sidelink sending resource of a shared frequency.

In a third aspect of the embodiments of the present disclosure, a sidelink communication method is provided. The sidelink communication method is performed by a destination terminal, and includes: receiving a failure indication sent by a terminal, in which the failure indication includes a first destination address identification, and a continuous LBT failure is triggered by a sidelink communication with the first destination address identification.

In a fourth aspect of the embodiments of the present disclosure, a sidelink communication apparatus is provided. The sidelink communication apparatus is applied to a terminal, and includes: a first processing unit, configured to determine whether a continuous LBT failure is triggered on a sidelink sending resource of a shared frequency; and a second processing unit, configured to, in response to the continuous LBT failure being triggered, report a failure indication to a network device or determine a backup sidelink sending resource for sending a sidelink message.

In a fifth aspect of the embodiments of the present disclosure, another sidelink communication apparatus is provided. The sidelink communication apparatus is applied to a network device, and includes: a transceiver unit, configured to send a first message to a terminal, in which the first message carries a specified timer and a specified number threshold, and is used for determining whether a continuous LBT failure is triggered on a sidelink sending resource of a shared frequency.

In a sixth aspect of the embodiments of the present disclosure, another sidelink communication apparatus is provided. The sidelink communication apparatus is applied to a destination terminal, and includes: a transceiver unit, configured to receive a failure indication sent by a terminal, in which the failure indication includes a first destination address identification, and a continuous LBT failure is triggered by a sidelink communication with the first destination address identification.

In a seventh aspect of the embodiments of the present disclosure, a sidelink communication apparatus is provided. The sidelink communication apparatus includes a processor and a memory, in which the memory has a computer program stored therein; and the processor executes the computer program stored in the memory, to enable the apparatus to implement the method according to the first aspect of the embodiments of the present disclosure.

In an eighth aspect of the embodiments of the present disclosure, another sidelink communication apparatus is provided. The sidelink communication apparatus includes a processor and a memory, in which the memory has a computer program stored therein; and the processor executes the computer program stored in the memory, to enable the apparatus to implement the method according to the second aspect of the embodiments of the present disclosure.

In a ninth aspect of the embodiments of the present disclosure, another sidelink communication apparatus is provided. The sidelink communication apparatus includes a processor and a memory, in which the memory has a computer program stored therein; and the processor executes the computer program stored in the memory, to enable the apparatus to implement the method according to the third aspect of the embodiments of the present disclosure.

In a tenth aspect of the embodiments of the present disclosure, a sidelink communication apparatus is provided. The sidelink communication apparatus includes a processor and an interface circuit, in which the interface circuit is used for receiving a code instruction and transmitting the code instruction to the processor; and the processor is used for running the code instruction, to implement the method according to the first aspect of the embodiments of the present disclosure.

In an eleventh aspect of the embodiments of the present disclosure, another sidelink communication apparatus is provided. The sidelink communication apparatus includes a processor and an interface circuit, in which the interface circuit is used for receiving a code instruction and transmitting the code instruction to the processor; and the processor is used for running the code instruction, to implement the method according to the second aspect of the embodiments of the present disclosure.

In a twelfth aspect of the embodiments of the present disclosure, another sidelink communication apparatus is provided. The sidelink communication apparatus includes a processor and an interface circuit, in which the interface circuit is used for receiving a code instruction and transmitting the code instruction to the processor; and the processor is used for running the code instruction, to implement the method according to the third aspect of the embodiments of the present disclosure.

In a thirteenth aspect of the embodiments of the present disclosure, a computer readable storage medium is provided. The computer readable storage medium stores an instruction therein; and when the instruction is executed, the method according to the first aspect of the embodiments of the present disclosure is implemented.

In a fourteenth aspect of the embodiments of the present disclosure, another computer readable storage medium is provided. The computer readable storage medium stores an instruction therein; and when the instruction is executed, the method according to the second aspect of the embodiments of the present disclosure is implemented.

In a fifteenth aspect of the embodiments of the present disclosure, another computer readable storage medium is provided. The computer readable storage medium stores an instruction therein; and when the instruction is executed, the method according to the third aspect of the embodiments of the present disclosure is implemented.

In a sixteenth aspect of the embodiments of the present disclosure, a computer program product is provided. When the computer program product operates on a computer, the computer can execute the method according to the first aspect of the embodiment of the present disclosure.

In a seventeenth aspect of the embodiments of the present disclosure, another computer program product is provided. When the computer program product operates on a computer, the computer can execute the method according to the second aspect of the embodiments of the present disclosure.

In an eighteenth aspect of the embodiments of the present disclosure, another computer program product is provided. When the computer program product operates on a computer, the computer can execute the method according to the third aspect of the embodiments of the present disclosure.

The additional aspects and advantages of the present disclosure will be provided in the following description, and will become obvious from the following description, or learned through the practice of the present disclosure.

### BRIEF DESCRIPTION OF THE DRAWINGS

In order to more clearly describe the technical solutions of the embodiments of the present disclosure or in the background, the accompanying drawings required to describe the embodiments of the present disclosure or the background are illustrated below.
FIG. 1 is a schematic structural diagram of a communication system provided by an embodiment of the present disclosure;
FIG. 2 is a flow chart of a sidelink communication method provided by an embodiment of the present disclosure;
FIG. 3 is a flow chart of another sidelink communication method provided by an embodiment of the present disclosure;
FIG. 4 is a flow chart of another sidelink communication method provided by an embodiment of the present disclosure;
FIG. 5 is a flow chart of another sidelink communication method provided by an embodiment of the present disclosure;
FIG. 6 is a flow chart of another sidelink communication method provided by an embodiment of the present disclosure;
FIG. 7 is a flow chart of another sidelink communication method provided by an embodiment of the present disclosure;
FIG. 8 is a flow chart of another sidelink communication method provided by an embodiment of the present disclosure;
FIG. 9 is a flow chart of another sidelink communication method provided by an embodiment of the present disclosure;
FIG. 10 is a schematic block diagram of a sidelink communication apparatus provided by an embodiment of the present disclosure;
FIG. 11 is a schematic block diagram of another sidelink communication apparatus provided by an embodiment of the present disclosure;
FIG. 12 is a schematic block diagram of another sidelink communication apparatus provided by an embodiment of the present disclosure;
FIG. 13 is a schematic block diagram of a network device provided by an embodiment of the present disclosure; and
FIG. 14 is a block diagram of a terminal provided by an embodiment of the present disclosure.

### DETAILED DESCRIPTION

Description will be made here in detail to an exemplary embodiment, examples of which are illustrated in the accompanying drawings. The following description refers to the accompanying drawings in which the same numbers in different drawings represent similar elements unless otherwise represented. The implementation modes set forth in the following exemplary embodiments do not represent all implementation modes consistent with the embodiments of the present disclosure. Rather, they are examples of apparatuses and methods consistent with some aspects of the embodiments of the present disclosure as disclosed in the appended claims in detail.

The terms used in the embodiments of the present disclosure are for the purpose of describing particular embodiments only, and are not intended to limit the embodiments of the present disclosure. The singular forms "a" and "the" used in the embodiments of the present disclosure and the appended claims are intended to include the plural forms as well, unless the context clearly indicates otherwise. It should be further understood that the term "and/or" used herein refers to and encompasses any and all possible combinations of one or more of the associated listed items.

It should be understood that although the terms first, second, third, etc. may be used in the embodiments of the present disclosure to describe various information, these information should not be limited by these terms. These terms are used only to distinguish information of the same type from each other. For example, first information could be termed second information, and, similarly, second information could be termed first information, without departing from the scope of the embodiments of the present disclosure. Depending on context, if the word "if" used herein may be interpreted as "when..." or "during..." or "determining in response to".

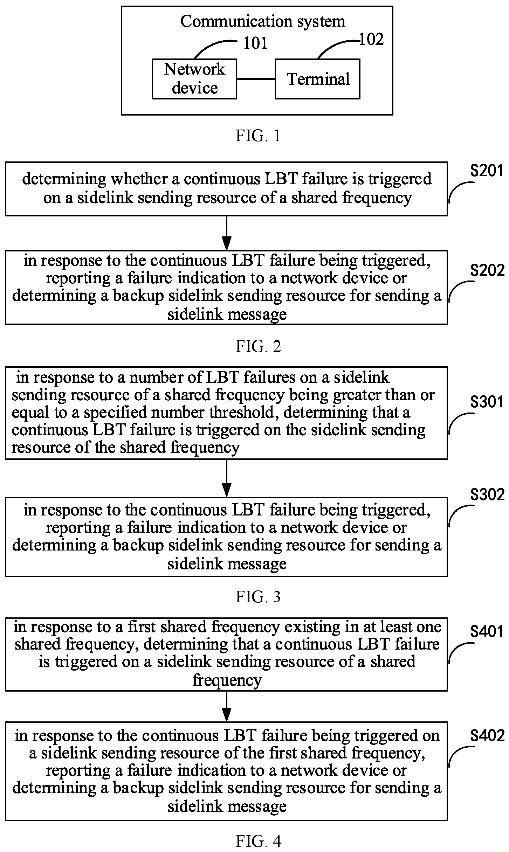

Referring to FIG. 1, FIG. 1 is a schematic structural diagram of a communication system provided by an embodiment of the present disclosure. The communication system may include, but is not limited to, a network device and a terminal. A number and a form of the devices shown in FIG. 1 are only used for examples and do not constitute a limitation to the embodiments of the present disclosure. In practical applications, the communication system may include two or more network devices and two or more terminals. The communication system shown in FIG. 1 may include one network device 101 and one terminal 102 as an example.

It is to be noted that the technical solutions of the embodiments of the present disclosure may be applied to various communication systems, for example, a long term evolution (LTE) system, a 5th generation (5G) mobile communication system, a 5G new radio (NR) system, or other future new mobile communication systems.

The network device 101 in the embodiments of the present disclosure is an entity used to send or receive signals on a network side. For example, the network device 101 may be an evolved NodeB (eNB), a transmission reception point or transmit receive point (TRP), a next generation NodeB (gNB) in an NR system, a base station in a future mobile communication system or an access node in a wireless fidelity (Wi-Fi^{™}) system, and the like. Specific technologies and specific device forms used by the network device are not limited in the embodiments of the present disclosure. The network device provided in the embodiments of the present disclosure may be composed of a central unit (CU) and a distributed unit (DU). The CU may also be referred to as a control unit. The CU-DU structure may split a protocol layer of the network device, for example, a protocol layer of the base station, some functions of the protocol layer are placed in the CU for centralized control, and some or all of the remaining functions of the protocol layer are distributed in the DU, which is intensively controlled by the CU.

The terminal 102 in the embodiments of the present disclosure is an entity used to receive or send signals on a user side, for example, a mobile phone. The terminal may also be referred to as a terminal, a user equipment (UE), a mobile station (MS), a mobile terminal (MT), or the like. The terminal may be an automobile with a communication function, an intelligent automobile, a mobile phone, a wearable device, a pad, a computer with a wireless transceiver function, a virtual reality (VR) terminal, an augmented reality (AR) terminal, a wireless terminal in the industrial control, a wireless terminal in the self-driving, a wireless terminal in the remote medical surgery, a wireless terminal in the smart grid, a wireless terminal in the transportation safety, a wireless terminal in the smart city, a wireless terminal in the smart home, etc. Specific technologies and specific device forms used by the terminal are not limited in the embodiments of the present disclosure.

In order to support a direct communication between UEs, a sidelink communication mode is introduced, and an interface between the UEs is PC-5. According to a correspondence between a transmitting UE and a receiving UE, there are three transmission modes such as unicast, multicast, and broadcast supported on the sidelink. In a unicast connection, each UE corresponds to one destination address identification; in multicast, each UE may belong to one or more groups, and each group corresponds to one destination address identification; and in broadcast, all the UEs at least correspond to one destination address identification.

When the UE sends sidelink data, there is a need for addressing according to a destination address and a source address. An application layer sends a source layer 2 address and a destination layer 2 address to an access layer, with a length of 24 bits. The lower 8 bits of the source layer 2 address are carried in sidelink control information (SCI) as a source layer 1 address, and the remaining 16 bits are carried in a media access control (MAC) subheader. The lower 16 bits of the destination layer 2 address are carried in the SCI as a destination layer 1 address, and the remaining 8 bits are carried in the MAC subheader.

If a sidelink radio link failure or a sidelink configuration failure occurs in a certain unicast connection, the UE reports to a destination address identification of a destination UE in the unicast connection where the failure occurs and a failure cause to the network device, in which the failure cause includes the sidelink radio link failure or the sidelink configuration failure.

When the UE performs an uplink transmission on a shared frequency (an unlicensed spectrum), the UE needs to perform LBT (Listen Before Talk). When an LBT failure occurs, a physical layer will notify a media access control (MAC) layer. When receiving an LBT failure indication, the MAC layer starts or restarts a specified timer (e.g., lbt-FailureDetectionTimer), and a number of LBT failures are added by one. If the specified timer is timed out, the number of LBT failures is reset to be 0. If the number of LBT failures reaches a specified number threshold (e.g., lbt-FailureInstanceMaxCount), a continuous LBT failure is triggered. The specified timer and the specified number threshold are configured by the network device through a radio resource control (RRC) message.

If the continuous LBT failure is triggered on all uplink band width parts (BWPs) of a serving cell, a radio link failure (RLF) occurs in the serving cell. Otherwise, the UE will switch the active uplink BWP to an uplink BWP in which the continuous LBT failure does not occur.

The UE needs to perform listen before talk (LBT) when conducting a sidelink transmission on a sidelink sending resource of a shared frequency, which may lead to a LBT failure. If the LBT failure occurs, the UE continues to wait, which may lead to a data sending delay and even data loss.

For the above problems, the present disclosure provides a sidelink communication method and apparatus.

It is understandable that the communication system described in the embodiments of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

The sidelink communication method and apparatus provided by the embodiments of the present disclosure will be described in detail below in combination with the accompanying drawings.

Referring to FIG. 2, FIG. 2 is a flow chart of a sidelink communication method provided by an embodiment of the present disclosure. The sidelink communication method may be executed by the terminal in the communication system as illustrated in FIG. 1.

As illustrated in FIG. 2, the sidelink communication method may include the following steps.

At step 201, it is determined whether a continuous LBT failure is triggered on a sidelink sending resource of a shared frequency.

In the embodiments of the present disclosure, it is determined that the continuous LBT failure is triggered on the sidelink sending resource of the shared frequency if a number of LBT failures on the sidelink sending resource of the shared frequency is greater than or equal to a specified number threshold. It is determined that the continuous LBT failure is not triggered on the sidelink sending resource of the shared frequency if the number of LBT failures in a specified timer range is smaller than the specified number threshold.

At step 202, in response determining that the continuous LBT failure is triggered, a failure indication is reported to a network device or a backup sidelink sending resource for sending a sidelink message is determined.

The backup sidelink sending resource may be a sidelink sending resource of the shared frequency, and may also be a sidelink sending resource of a non-shared frequency.

In the embodiments of the present disclosure, in an example, when the continuous LBT failure is triggered, the terminal reports a first failure indication to the network device, and sends the sidelink message according to a backup sidelink sending resource scheduled by the network device.

In the embodiments of the present disclosure, in another example, when the continuous LBT failure is triggered, the backup sidelink sending resource is selected from at least one configured candidate sidelink sending resource, for sending the sidelink message. A candidate sidelink sending resource of the shared frequency or a candidate sidelink sending resource of the non-shared frequency where the continuous LBT failure is not triggered is selected from the at least one candidate sidelink sending resource as the backup sidelink sending resource.

In the embodiments of the present disclosure, in an example, the terminal receives a fourth RRC message from the network device. The fourth RRC message carries a candidate sidelink sending resource, and the candidate sidelink sending resource includes the candidate sidelink sending resource of the shared frequency or the candidate sidelink sending resource of the non-shared frequency.

In another example, the terminal receives a second sidelink RRC message from a destination terminal corresponding to at least one destination address identification. The second sidelink RRC message carries a candidate sidelink sending resource. The candidate sidelink sending resource includes the candidate sidelink sending resource of the shared frequency or the candidate sidelink sending resource of the non-shared frequency.

In the above embodiments of the present disclosure, an implementation of the sidelink communication method on the shared frequency is also applicable to the sidelink communication method of an unlicensed frequency.

In summary, by determining whether the continuous LBT failure is triggered on the sidelink sending resource of the shared frequency, and when the continuous LBT failure is triggered, reporting the failure indication to the network device or determining the backup sidelink sending resource for sending the sidelink message, the terminal can send data in a timely manner when the LBT failure occurs, thus avoiding data loss and increasing communication reliability.

The embodiments of the present disclosure provide another sidelink communication method. FIG. 3 is a flow chart of another sidelink communication method provided by an embodiment of the present disclosure. The sidelink communication method may be performed by the terminal. The sidelink communication method may be performed alone or in combination with any of the embodiments or possible implementations of the embodiments in the disclosure, or in combination with any of the technical solutions in the related art.

As illustrated in FIG. 3, the sidelink communication method may include the following steps.

At step 301, it is determined that a continuous LBT failure is triggered on a sidelink sending resource of a shared frequency in response to a number of LBT failures on the sidelink sending resource of the shared frequency being greater than or equal to a specified number threshold.

In the embodiments of the present disclosure, a process of determining by the terminal the number of LBT failures on the sidelink sending resource of the shared frequency may include, for example, in response to timeout of the specified timer, resetting a current number of the LBT failures to be zero and stopping the specified timer; and in response to the LBT failure occurring on the sidelink sending resource of the shared frequency, starting or restarting the specified timer, and adding the current number of the LBT failures by 1.

In the embodiments of the present disclosure, when the LBT failure occurs on the sidelink sending resource of the shared frequency, if the specified timer has not been started, the specified timer is started, and the number of LBT failures is added by 1; and if the specified timer is not stopped or has been started, the specified timer is restarted, and the number of LBT failures is added by 1.

The number of LBT failures on the sidelink sending resource of the shared frequency includes the number of LBT failures on all sidelink sending resources of all shared frequencies.

In the embodiments of the present disclosure, it is determined that the continuous LBT failure is not triggered on the sidelink sending resource of the shared frequency if the number of LBT failures in the specified timer range is smaller than the specified number threshold.

In the embodiments of the present disclosure, before the terminal determines whether the continuous LBT failure is triggered on the sidelink sending resource of the shared frequency, the terminal receives a first RRC message from the network device, in which the first RRC message carries the specified timer and the specified number threshold; and the specified timer is used for resetting the number of LBT failures in response to timeout of the specified timer.

The first RRC message carries the same number of specified timers and specified number thresholds, and may carry one specified timer and one specified number threshold.

At step 302, in response to the continuous LBT failure being triggered, a failure indication is reported to a network device or a backup sidelink sending resource for sending a sidelink message is determined.

In the embodiments of the present disclosure, in an example, when the continuous LBT failure is triggered, the terminal reports a first failure indication to the network device, and sends the sidelink message according to a backup sidelink sending resource scheduled by the network device.

In the embodiments of the present disclosure, in another example, when the continuous LBT failure is triggered, the backup sidelink sending resource is selected from at least one configured candidate sidelink sending resource, for sending the sidelink message. A candidate sidelink sending resource of the shared frequency or a candidate sidelink sending resource of the non-shared frequency where the continuous LBT failure is not triggered is selected from the at least one candidate sidelink sending resource as the backup sidelink sending resource.

In the embodiments of the present disclosure, in an example, the terminal receives a fourth RRC message from the network device. The fourth RRC message carries a candidate sidelink sending resource, and the candidate sidelink sending resource includes the candidate sidelink sending resource of the shared frequency or the candidate sidelink sending resource of the non-shared frequency.

In another example, the terminal receives a second sidelink RRC message from a destination terminal corresponding to at least one destination address identification. The second sidelink RRC message carries a candidate sidelink sending resource. The candidate sidelink sending resource includes the candidate sidelink sending resource of the shared frequency or the candidate sidelink sending resource of the non-shared frequency.

In the above embodiments of the present disclosure, an implementation of the sidelink communication method on the shared frequency is also applicable to the sidelink communication method of an unlicensed frequency.

In summary, by determining that the continuous LBT failure is triggered on the sidelink sending resource of the shared frequency in response to the number of LBT failures on the sidelink sending resource of the shared frequency being greater than or equal to the specified number threshold, and when the continuous LBT failure is triggered, reporting the failure indication to the network device or determining the backup sidelink sending resource for sending the sidelink message, the terminal can send data in a timely manner when the LBT failure occurs, thus avoiding data loss and increasing communication reliability.

The embodiments of the present disclosure provide another sidelink communication method. FIG. 4 is a flow chart of another sidelink communication method provided by an embodiment of the present disclosure. The sidelink communication method may be performed by the terminal. The path switching method may be performed alone or in combination with any of the embodiments or possible implementations of the embodiments in the disclosure, or in combination with any of the technical solutions in the related art.

As illustrated in FIG. 4, the sidelink communication method may include the following steps.

At step 401, it is determined that a continuous LBT failure is triggered on a sidelink sending resource of a shared frequency in response to a first shared frequency existing in at least one shared frequency.

On a sidelink sending resource of a first shared frequency, a number of LBT failures corresponding to a first shared frequency is greater than or equal to a specified number threshold corresponding to the first shared frequency.

It is determined that the continuous LBT failure is not triggered on the sidelink sending resource of the first shared frequency if the number of LBT failures corresponding to the first shared frequency is smaller than the specified number threshold corresponding to the first shared frequency.

In the embodiments of the present disclosure, before the terminal determines whether the first shared frequency exists in the at least one shared frequency, the terminal receives a second RRC message from a network device. The second RRC message carries: a specified timer corresponding to the at least one shared frequency, and a specified number threshold corresponding to the at least one shared frequency. The specified timer is used for resetting the number of LBT failures corresponding to the shared frequency in response to timeout of the specified timer.

In the embodiments of the present disclosure, the at least one shared frequency corresponds to the same specified timer or different specified timers; and the at least one shared frequency corresponds to the same specified number threshold or different specified number thresholds.

There are a plurality of shared frequencies, a plurality of specified timers, and a plurality of specified number thresholds. In an example, each shared frequency may correspond to one specified timer; and each shared frequency may correspond to one specified number threshold. In another example, a plurality of shared frequencies may correspond to one specified timer; and a plurality of shared frequencies may correspond to one specified number threshold.

At step 402, in response to the continuous LBT failure being triggered on the sidelink sending resource of the first shared frequency, a failure indication is reported to a network device or a backup sidelink sending resource for sending a sidelink message is determined.

In the embodiments of the present disclosure, in an example, when the continuous LBT failure is triggered on the sidelink sending resource of the first shared frequency, a second failure indication carrying the first shared frequency is reported to the network device, and sends the sidelink message according to a backup sidelink sending resource scheduled by the network device.

In another example, when the continuous LBT failure is triggered on the sidelink sending resource of the first shared frequency, the terminal may select the backup sidelink sending resource from at least one configured candidate sidelink sending resource, for sending the sidelink message.

A candidate sidelink sending resource of the shared frequency or a candidate sidelink sending resource of the non-shared frequency where the continuous LBT failure is not triggered is selected from the at least one candidate sidelink sending resource as the backup sidelink sending resource.

In the embodiments of the present disclosure, in an example, the terminal receives a fourth RRC message from the network device. The fourth RRC message carries a candidate sidelink sending resource, and the candidate sidelink sending resource includes the candidate sidelink sending resource of the shared frequency or the candidate sidelink sending resource of the non-shared frequency.

In another example, the terminal receives a second sidelink RRC message from a destination terminal corresponding to at least one destination address identification. The second sidelink RRC message carries a candidate sidelink sending resource. The candidate sidelink sending resource includes the candidate sidelink sending resource of the shared frequency or the candidate sidelink sending resource of the non-shared frequency.

In the above embodiments of the present disclosure, an implementation of the sidelink communication method on the shared frequency is also applicable to the sidelink communication method of an unlicensed frequency.

In summary, it is determined that the continuous LBT failure is triggered on the sidelink sending resource of the first shared frequency in response to the first shared frequency existing in the at least one shared frequency. On the sidelink sending resource of the first shared frequency, the number of LBT failures corresponding to the first shared frequency is greater than or equal to the specified number threshold corresponding to the first shared frequency. When the continuous LBT failure is triggered on the sidelink sending resource of the first shared frequency, the failure indication is reported to the network device or the backup sidelink sending resource is determined for sending the sidelink message. Therefore, the terminal can send data in the timely manner when the LBT failure occurs, thus avoiding the data loss and increasing communication reliability.

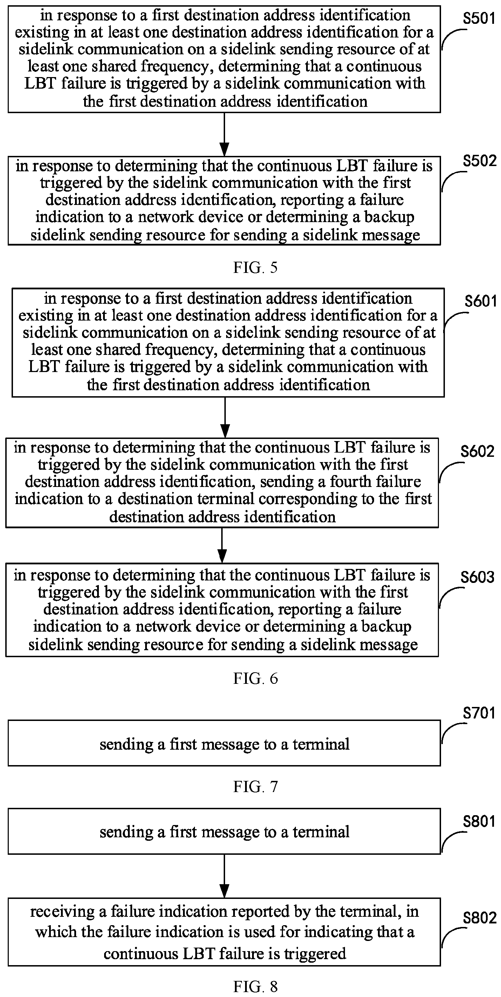

The embodiments of the present disclosure provide another sidelink communication method. FIG. 5 is a flow chart of another sidelink communication method provided by an embodiment of the present disclosure. The sidelink communication method may be performed by the terminal. The sidelink communication method may be performed alone or in combination with any of the embodiments or possible implementations of the embodiments in the disclosure, or in combination with any of the technical solutions in the

### related art.

At step 501, it is determined that a continuous LBT failure is triggered by a sidelink communication with a first destination address identification in response to the first destination address identification existing in at least one destination address identification for a sidelink communication on a sidelink sending resource of at least one shared frequency.

On a sidelink sending resource of a shared frequency for the sidelink communication with the first destination address identification, a number of LBT failures corresponding to the first destination address identification is greater than or equal to a specified number threshold corresponding to the first destination address identification.

If on the sidelink sending resource of the shared frequency for the sidelink communication with the first destination address identification, the number of LBT failures corresponding to the first destination address identification is smaller than the specified number threshold corresponding to the first destination address identification, it is determined that the continuous LBT failure is not triggered by the sidelink communication performed with the first destination address identification.

In the embodiments of the present disclosure, in an example, before determining whether the continuous LBT failure is triggered on the sidelink sending resource of the shared frequency, the terminal receives a third RRC message from a network device. The third RRC message carries: a specified timer corresponding to the at least one destination address identification, and a specified number threshold corresponding to the at least one destination address identification. The specified timer is used for resetting the number of LBT failures corresponding to the shared frequency in response to timeout of the specified timer.

In another example, a first sidelink RRC message is received from a destination terminal corresponding to the at least one destination address identification. The first sidelink RRC message carries: a specified timer corresponding to the destination address identification, and a specified number threshold corresponding to the destination address identification.

The at least one destination address identification corresponds to the same specified timer or different specified timers; and the at least one destination address identification corresponds to the same specified number threshold or different specified number thresholds.

At step 502, in response to the continuous LBT failure being triggered by the sidelink communication with the first destination address identification, a failure indication is reported to a network device or a backup sidelink sending resource for sending a sidelink message is determined.

In the embodiments of the present disclosure, in an example, when the continuous LBT failure is triggered by the sidelink communication performed with the first destination address identification, a third failure indication carrying the first destination address identification is reported to the network device, and sends the sidelink message according to a backup sidelink sending resource scheduled by the network device.

In the embodiments of the present disclosure, in another example, when the continuous LBT failure is triggered by the sidelink communication performed with the first destination address identification, the terminal may select a candidate sidelink sending resource of a shared frequency or a candidate sidelink sending resource of a non-shared frequency from at least one configured candidate sidelink sending resource as the backup sidelink sending resource.

The terminal selects the candidate sidelink sending resource of the shared frequency where the continuous LBT failure is not triggered from the at least one configured candidate sidelink sending resource as the backup sidelink sending resource for sending the sidelink message.

In the above embodiments of the present disclosure, an implementation of the sidelink communication method on the shared frequency is also applicable to the sidelink communication method of an unlicensed frequency.

In summary, it is determined that the continuous LBT failure is triggered by the sidelink communication with the first destination address identification in response to the first destination address identification existing in the at least one destination address identification for the sidelink communication on the sidelink sending resource of the at least one shared frequency. On the sidelink sending resource of the shared frequency for the sidelink communication with the first destination address identification, the number of LBT failures corresponding to the first destination address identification is greater than or equal to the specified number threshold corresponding to the first destination address identification. When the continuous LBT failure is triggered, the failure indication is reported to the network device or the backup sidelink sending resource is determined for sending the sidelink message. Therefore, the terminal can send data in the timely manner when the LBT failure occurs, thus avoiding the data loss and increasing communication reliability.

The embodiments of the present disclosure provide another sidelink communication method. FIG. 6 is a flow chart of another sidelink communication method provided by an embodiment of the present disclosure. The sidelink communication method may be performed by the terminal. The sidelink communication method may be executed by the terminal in FIG. 1.

As illustrated in FIG. 6, the sidelink communication method may include the following steps.

At step 601, it is determined that a continuous LBT failure is triggered by a sidelink communication with a first destination address identification in response to the first destination address identification existing in at least one destination address identification for a sidelink communication on a sidelink sending resource of at least one shared frequency.

On a sidelink sending resource of a shared frequency for the sidelink communication with the first destination address identification, a number of LBT failures corresponding to the first destination address identification is greater than or equal to a specified number threshold corresponding to the first destination address identification.

At step 602, a fourth failure indication is sent to a destination terminal corresponding to the first destination address identification in response to the continuous LBT failure being triggered by the sidelink communication with the first destination address identification.

In the embodiments of the present disclosure, in an example, the fourth failure indication is used for instructing the destination terminal to stop receiving the sidelink message from the terminal on a sidelink sending resource of a shared frequency where the continuous LBT failure occurs.

In another example, the fourth failure indication is used for instructing to receive the sidelink message on a backup sidelink sending resource in response to presence of the backup sidelink sending resource.

In the embodiments of the present disclosure, the fourth failure indication further carries a second shared frequency. In the sidelink sending resource of the at least one shared frequency used for the sidelink communication performed with the first destination address identification, the continuous LBT failure is triggered on the sidelink sending resource of the second shared frequency.

In the embodiments of the present disclosure, the terminal sends the fourth failure indication carrying the second shared frequency to the destination terminal, the continuous LBT failure is triggered on the sidelink sending resource of the second shared frequency, that is to say, the sidelink sending resource of the second shared frequency cannot be used to send the sidelink message.

In the embodiments of the present disclosure, in an example, a third sidelink RRC message is sent to the destination terminal corresponding to the first destination address identification. The third sidelink RRC message carries the fourth failure indication. In another example, a sidelink MAC CE message is sent to the destination terminal corresponding to the first destination address identification, in which the sidelink MAC CE message carries the fourth failure indication.

At step 603, in response to the continuous LBT failure being triggered by the sidelink communication with the first destination address identification, a failure indication is reported to a network device or a backup sidelink sending resource for sending a sidelink message is determined.

In the embodiments of the present disclosure, in an example, when the continuous LBT failure is triggered by the sidelink communication performed with the first destination address identification, the terminal may select a candidate sidelink sending resource of a shared frequency or a candidate sidelink sending resource of a non-shared frequency from at least one configured candidate sidelink sending resource as the backup sidelink sending resource.

The terminal selects the candidate sidelink sending resource of the shared frequency where the continuous LBT failure is not triggered from the at least one configured candidate sidelink sending resource as the backup sidelink sending resource for sending the sidelink message.

In another example, when the continuous LBT failure is triggered by the sidelink communication performed with the first destination address identification, the candidate sidelink sending resource of the non-shared frequency is selected from the at least one configured candidate sidelink sending resource as the backup sidelink sending resource.

In the embodiments of the present disclosure, in an example, a fourth RRC message is received from the network device. The fourth RRC message carries a candidate sidelink sending resource, and the candidate sidelink sending resource includes the candidate sidelink sending resource of the shared frequency or the candidate sidelink sending resource of the non-shared frequency.

In another example, a second sidelink RRC message is received from a destination terminal corresponding to at least one destination address identification. The second sidelink RRC message carries a candidate sidelink sending resource. The candidate sidelink sending resource includes the candidate sidelink sending resource of the shared frequency or the candidate sidelink sending resource of the non-shared frequency.

In the above embodiments of the present disclosure, an implementation of the sidelink communication method on the shared frequency is also applicable to the sidelink communication method of an unlicensed frequency.

In summary, it is determined that the continuous LBT failure is triggered by the sidelink communication with the first destination address identification in response to the first destination address identification existing in the at least one destination address identification for the sidelink communication on the sidelink sending resource of the at least one shared frequency. On the sidelink sending resource of the shared frequency for the sidelink communication with the first destination address identification, the number of LBT failures corresponding to the first destination address identification is greater than or equal to the specified number threshold corresponding to the first destination address identification. When the continuous LBT failure is triggered by the sidelink communication with the first destination address identification, the fourth failure indication is sent to the destination terminal corresponding to the first destination address identification. When it is determined that the continuous LBT failure is triggered by the sidelink communication with the first destination address identification, the failure indication is reported to the network device or the backup sidelink sending resource is determined for sending the sidelink message. Therefore, the terminal can send data in the timely manner when the LBT failure occurs, thus avoiding the data loss and increasing communication reliability.

The embodiments of the present disclosure provide another sidelink communication method. FIG. 7 is a flow chart of another sidelink communication method provided by an embodiment of the present disclosure. The sidelink communication method may be performed by the network device. The sidelink communication method may be performed alone or in combination with any of the embodiments or possible implementations of the embodiments in the disclosure, or in combination with any of the technical solutions in the related art.

As illustrated in FIG. 7, the sidelink communication method may include the following steps.

At step 701, a first message is sent to a terminal.

In the embodiments of the present disclosure, the first message may, for example, be an RRC message. In an example, the first message carries a specified timer and a specified number threshold, and is used for determining whether a continuous LBT failure is triggered on a sidelink sending resource of a shared frequency. The first RRC message carries the same number of specified timers and specified number thresholds, and may carry one specified timer and one specified number threshold. The specified timer is used for resetting a number of LBT failures in response to timeout of the specified timer.

In another example, the first message carries a specified timer corresponding to at least one shared frequency and a specified number threshold corresponding to the at least one shared frequency, and is used for determining whether the continuous LBT failure is triggered on the sidelink sending resource of the shared frequency. The specified timer is used for resetting the number of LBT failures corresponding to the shared frequency in response to timeout of the specified timer. The at least one shared frequency corresponds to the same specified timer or different specified timers; and the at least one shared frequency corresponds to the same specified number threshold or different specified number thresholds.

There is at least one specified timer corresponding to the at least one shared frequency, and there is at least one specified number threshold corresponding to the at least one shared frequency.

In another example, the first message carries a specified timer corresponding to at least one destination address identification and a specified number threshold corresponding to the at least one destination address identification, and is used for determining whether the continuous LBT failure is triggered on the sidelink sending resource of the shared frequency. The specified timer is used for resetting the number of LBT failures corresponding to a destination address identification in response to timeout of the specified timer.

There is at least one specified timer corresponding to the at least one destination address identification, and there is at least one specified number threshold corresponding to the at least one destination address identification.

In the embodiments of the present disclosure, the network device sends a fourth RRC message to the terminal. The fourth RRC message carries a candidate sidelink sending resource, in which the candidate sidelink sending resource includes a candidate sidelink sending resource of the shared frequency or a candidate sidelink sending resource of a non-shared frequency.

In the above embodiments of the present disclosure, an implementation of the sidelink communication method on the shared frequency is also applicable to the sidelink communication method of an unlicensed frequency.

In summary, the network device sends the first message to the terminal, the first message carries the specified timer and the specified number threshold, and is used for determining whether the continuous LBT failure is triggered on the sidelink sending resource of the shared frequency. Therefore, the terminal can send data in the timely manner when the LBT failure occurs, thus avoiding data loss and increasing communication reliability.

The embodiments of the present disclosure provide another sidelink communication method. FIG. 8 is a flow chart of another sidelink communication method provided by an embodiment of the present disclosure. The sidelink communication method may be performed by the network device. The sidelink communication method may be performed alone or in combination with any of the embodiments or possible implementations of the embodiments in the disclosure, or in combination with any of the technical solutions in the related art.

As illustrated in FIG. 8, the sidelink communication method may include the following steps.

At step 801, a first message is sent to a terminal.

In the embodiments of the present disclosure, the first message may, for example, be an RRC message. In an example, the first message carries a specified timer and a specified number threshold, and is used for determining whether a continuous LBT failure is triggered on a sidelink sending resource of a shared frequency. The first RRC message carries the same number of specified timers and specified number thresholds, and may carry one specified timer and one specified number threshold. The specified timer is used for resetting a number of LBT failures in response to timeout of the specified timer.

In another example, the first message carries a specified timer corresponding to at least one shared frequency and a specified number threshold corresponding to the at least one shared frequency, and is used for determining whether the continuous LBT failure is triggered on the sidelink sending resource of the shared frequency. The specified timer is used for resetting the number of LBT failures corresponding to the shared frequency in response to timeout of the specified timer. The at least one shared frequency corresponds to the same specified timer or different specified timers; and the at least one shared frequency corresponds to the same specified number threshold or different specified number thresholds.

There is at least one specified timer corresponding to the at least one shared frequency, and there is at least one specified number threshold corresponding to the at least one shared frequency.

In another example, the first message carries a specified timer corresponding to at least one destination address identification and a specified number threshold corresponding to the at least one destination address identification, and is used for determining whether the continuous LBT failure is triggered on the sidelink sending resource of the shared frequency. The specified timer is used for resetting the number of LBT failures corresponding to a destination address identification in response to timeout of the specified timer.

There is at least one specified timer corresponding to the at least one destination address identification, and there is at least one specified number threshold corresponding to the at least one destination address identification.

At step 802, a failure indication reported by the terminal is received, in which the failure indication is used for indicating that the continuous LBT failure is triggered.

In the embodiments of the present disclosure, the network device schedules a backup sidelink sending resource to the terminal according to the failure indication. The backup sidelink sending resource is a sidelink sending resource of the shared frequency, or a sidelink sending resource of a non-shared frequency.

In the embodiments of the present disclosure, in an example, the failure indication includes: a first shared frequency of the sidelink sending resource of the shared frequency on which the continuous LBT failure is triggered. According to the failure indication, the network device schedules, for the terminal, the sidelink sending resources of shared frequencies other than the first shared frequency or the sidelink sending resource of the non-shared frequency.

In another example, the failure indication includes a first destination address identification, in which the continuous LBT failure is triggered by a sidelink communication with the first destination address identification. According to the failure indication, the network device schedules, for the terminal, the sidelink sending resources of shared frequencies other than the sidelink sending resource of the shared frequency used for the sidelink communication with the first destination address identification or the sidelink sending resource of the non-shared frequency.

It is to be noted that explanation of the sidelink communication method executed by the terminal in any one of the aforementioned embodiments is also applicable to the sidelink communication method executed by the network device. Their implementation principles are similar, and will not be repeated here.

In summary, the network device sends the first message to the terminal, and receives the failure indication reported by the terminal. The failure indication is used for indicating that the continuous LBT failure is triggered. Therefore, the terminal can send data in the timely manner when the LBT failure occurs, thus avoiding data loss and increasing communication reliability.

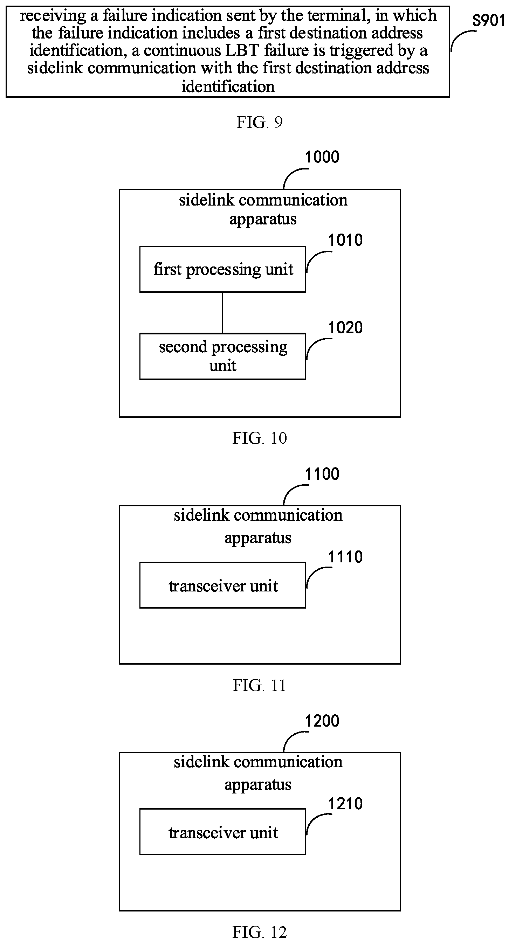

The embodiments of the present disclosure provide another sidelink communication method. FIG. 9 is a flow chart of another sidelink communication method provided by an embodiment of the present disclosure. The sidelink communication method may be performed by a destination terminal. The sidelink communication method may be performed alone or in combination with any of the embodiments or possible implementations of the embodiments in the disclosure, or in combination with any of the technical solutions in the related art.

As illustrated in FIG. 9, the sidelink communication method may include the following steps.

At step 901, a failure indication sent by a terminal is received, in which the failure indication includes a first destination address identification, and a continuous LBT failure is triggered by a sidelink communication with the first destination address identification.

In the embodiments of the present disclosure, in an example, according to the failure indication, reception of a sidelink message from the terminal on a sidelink sending resource of a shared frequency where the continuous LBT failure occurs is stopped. In another example, according to the failure indication, the sidelink message is received from the terminal on a backup sidelink sending resource in response to presence of the backup sidelink sending resource.

In the embodiments of the present disclosure, in an example, a sidelink RRC message is received from the terminal, in which the sidelink RRC message carries the failure indication. In another example, a sidelink MAC CE message sent by the terminal is received, in which the sidelink MAC CE message carries the failure indication.

It is to be noted that explanation of the sidelink communication method executed by the terminal in any one of the aforementioned embodiments is also applicable to the sidelink communication method executed by the destination terminal. Their implementation principles are similar, and will not be repeated here.

It is to be noted that these possible implementations mentioned above may be executed alone or in combination, which is not limited by the embodiments of the present disclosure.

In the above embodiments of the disclosure, the method provided in the embodiments of the disclosure is described from the perspectives of the terminal, the network device and the destination terminal, respectively. In order to implement each of the above-described functions in the method provided by the embodiments of the disclosure, the terminal, the network device and the destination terminal may include a hardware structure or a software module, and implement each of the above-described functions in the form of the hardware structure, the software module, or a combination of the hardware structure and the software module. A certain function of the above functions may be performed in the form of the hardware structure, the software module, or the combination of the hardware structure and the software module.

Corresponding to the sidelink communication methods provided by the embodiments with reference to FIGs. 2-6, the present disclosure further provides a sidelink communication apparatus. As the sidelink communication apparatus provided by the embodiments of the present disclosure correspond to the sidelink communication methods provided by the embodiments with reference to in FIGs. 2-6, the implementations of the sidelink communication methods are also applicable to the sidelink communication apparatus provided by the embodiments of the present disclosure, which will be no longer described in detail in the embodiments of the present disclosure.

FIG. 10 is a schematic block diagram of a sidelink communication apparatus provided by an embodiment of the present disclosure. The sidelink communication apparatus may be applied to a terminal.

As illustrated in FIG. 10, the sidelink communication apparatus 1000 includes: a first processing unit 1010 and a second processing unit 1020.

The first processing unit 1010 is configured to determine whether a continuous LBT failure is triggered on a sidelink sending resource of a shared frequency. The second processing unit 1020 is configured to, in response to the continuous LBT failure being triggered, report a failure indication to a network device or determine a backup sidelink sending resource for sending a sidelink message.

As a possible implementation of the embodiments of the present disclosure, the first processing unit 1010 is specifically configured to determine that the continuous LBT failure is triggered on the sidelink sending resource of the shared frequency in response to a number of LBT failures on the sidelink sending resource of the shared frequency being greater than or equal to a specified number threshold.

As a possible implementation of the embodiments of the present disclosure, the first processing unit 1010 is configured to, in response to timeout of the specified timer, reset a current number of LBT failures to be zero and stop the specified timer; and in response to the LBT failure occurring on the sidelink sending resource of the shared frequency, start or restart the specified timer, and add the current number of LBT failures by 1.

As a possible implementation of the embodiments of the present disclosure, the sidelink communication apparatus 1000 further includes: a transceiver unit, configured to receive a first RRC message from the network device, in which the first RRC message carries the specified timer and the specified number threshold; and the specified timer is configured to reset the number of LBT failures in response to timeout of the specified timer.

As a possible implementation of the embodiments of the present disclosure, the first processing unit 1010 is specifically configured to determine that the continuous LBT failure is triggered on a sidelink sending resource of a first shared frequency in response to the first shared frequency existing in at least one shared frequency, in which on the sidelink sending resource of the first shared frequency, a number of LBT failures corresponding to the first shared frequency is greater than or equal to a specified number threshold corresponding to the first shared frequency.

As a possible implementation of the embodiments of the present disclosure, the transceiver unit is further configured to receive a second RRC message from the network device, in which the second RRC message carries a specified timer corresponding to the at least one shared frequency, and a specified number threshold corresponding to the at least one shared frequency; and the specified timer is used for resetting the number of LBT failures corresponding to the shared frequency in response to timeout of the specified timer; the at least one shared frequency corresponds to the same specified timer or different specified timers; and the at least one shared frequency corresponds to the same specified number threshold or different specified number thresholds.

As a possible implementation of the embodiments of the present disclosure, the first processing unit 1010 is specifically configured to determine that the continuous LBT failure is triggered by a sidelink communication with a first destination address identification in response to the first destination address identification existing in at least one destination address identification for a sidelink communication on a sidelink sending resource of at least one shared frequency, in which on a sidelink sending resource of a shared frequency for the sidelink communication with the first destination address identification, a number of LBT failures corresponding to the first destination address identification is greater than or equal to a specified number threshold corresponding to the first destination address identification.

As a possible implementation of the embodiments of the present disclosure, the transceiver unit is further configured to receive a third RRC message from the network device, in which the third RRC message carries a specified timer corresponding to the at least one destination address identification, and a specified number threshold corresponding to the at least one destination address identification; and the specified timer is used for resetting a number of LBT failures corresponding to the destination address identification in response to timeout of the specified timer; or the transceiver unit is further configured to receive a first sidelink RRC message from a destination terminal corresponding to the at least one destination address identification, in which the first sidelink RRC message carries a specified timer corresponding to the destination address identification, and a specified number threshold corresponding to the destination address identification; the at least one destination address identification corresponds to the same specified timer or different specified timers; and the at least one destination address identification corresponds to the same specified number threshold or different specified number thresholds.

As a possible implementation of the embodiments of the present disclosure, the second processing unit 1020 is specifically configured to report a first failure indication to the network device in response to the continuous LBT failure being triggered.

As a possible implementation of the embodiments of the present disclosure, the second processing unit 1020 is specifically configured to select the backup sidelink sending resource from at least one configured candidate sidelink sending resource in response to the continuous LBT failure being triggered.

As a possible implementation of the embodiments of the present disclosure, the second processing unit 1020 is specifically configured to report a second failure indication carrying the first shared frequency to the network device in response to the continuous LBT failure being triggered on a sidelink sending resource of a first shared frequency, in which on the sidelink sending resource of the first shared frequency, a number of LBT failures corresponding to the first shared frequency is greater than or equal to a specified number threshold corresponding to the first shared frequency.

As a possible implementation of the embodiments of the present disclosure, the second processing unit 1020 is specifically configured to select a candidate sidelink sending resource of the shared frequency or a candidate sidelink sending resource of a non-shared frequency from at least one configured candidate sidelink sending resource as the backup sidelink sending resource in response to the continuous LBT failure being triggered on a sidelink sending resource of a first shared frequency, in which on the sidelink sending resource of the first shared frequency, a number of LBT failures corresponding to the first shared frequency is greater than or equal to a specified number threshold corresponding to the first shared frequency.

As a possible implementation of the embodiments of the present disclosure, the second processing unit 1020 is specifically configured to report a third failure indication carrying the first destination address identification to the network device in response to the continuous LBT failure being triggered by a sidelink communication with a first destination address identification, in which on a sidelink sending resource of a shared frequency for the sidelink communication with the first destination address identification, a number of LBT failures corresponding to the first destination address identification is greater than or equal to a specified number threshold corresponding to the first destination address identification.

As a possible implementation of the embodiments of the present disclosure, the second processing unit 1020 is specifically configured to select a candidate sidelink sending resource of the shared frequency or a candidate sidelink sending resource of a non-shared frequency from at least one configured candidate sidelink sending resource as the backup sidelink sending resource in response to the continuous LBT failure being triggered by a sidelink communication with a first destination address identification, in which on a sidelink sending resource of a shared frequency for the sidelink communication with the first destination address identification, a number of LBT failures corresponding to the first destination address identification is greater than or equal to a specified number threshold corresponding to the first destination address identification.

As a possible implementation of the embodiments of the present disclosure, the transceiver unit is further configured to receive a fourth RRC message from the network device, in which the fourth RRC message carries the candidate sidelink sending resource; or receive a second sidelink RRC message from a destination terminal corresponding to at least one destination address identification, in which the second sidelink RRC message carries the candidate sidelink sending resource.

As a possible implementation of the embodiments of the present disclosure, the transceiver unit is further configured to send a fourth failure indication to a destination terminal corresponding to the first destination address identification in response to the continuous LBT failure being triggered by a sidelink communication with a first destination address identification, in which on a sidelink sending resource of a shared frequency for the sidelink communication with the first destination address identification, a number of LBT failures corresponding to the first destination address identification is greater than or equal to a specified number threshold corresponding to the first destination address identification.

As a possible implementation of the embodiments of the present disclosure, the fourth failure indication is used for instructing the destination terminal to stop receiving the sidelink message from the terminal on a sidelink sending resource of a shared frequency where the continuous LBT failure occurs; or the fourth failure indication is used for instructing to receive the sidelink message on the backup sidelink sending resource in response to presence of the backup sidelink sending resource.

As a possible implementation of the embodiments of the present disclosure, the fourth failure indication further carries a second shared frequency, in which in the sidelink sending resource of the at least one shared frequency used for the sidelink communication with the first destination address identification, the continuous LBT failure is triggered on a sidelink sending resource of the second shared frequency.

As a possible implementation of the embodiments of the present disclosure, the transceiver unit is further configured to send a third sidelink RRC message to the destination terminal corresponding to the first destination address identification, in which the third sidelink RRC message carries the fourth failure indication; or send a sidelink MAC CE message to the destination terminal corresponding to the first destination address identification, in which the sidelink MAC CE message carries the fourth failure indication.

The sidelink communication apparatus of the embodiments of the present disclosure is applied to the terminal. By determining whether the continuous LBT failure is triggered on the sidelink sending resource of the shared frequency, and when the continuous LBT failure is triggered, reporting the failure indication to the network device or determining the backup sidelink sending resource for sending the sidelink message, the terminal can send data in a timely manner when the LBT fails, thus avoiding data loss and increasing communication reliability.

Corresponding to the sidelink communication methods provided by the embodiments with reference to FIGs. 7-8, the present disclosure further provides a sidelink communication apparatus. As the sidelink communication apparatus provided by the embodiments of the present disclosure corresponds to the sidelink communication methods provided by the embodiments with reference to FIGs. 7-8, the implementations of the sidelink communication methods are also applicable to the sidelink communication apparatus provided by the embodiments of the present disclosure, which is no longer described in detail in the embodiments of the present disclosure.

FIG. 11 is a schematic block diagram of another sidelink communication apparatus provided by an embodiment of the present disclosure. The sidelink communication apparatus is applied to a network device.

As illustrated in FIG. 11, the sidelink communication apparatus 1100 includes a transceiver unit 1110.

The transceiver unit 1110 is configured to send a first message to a terminal, in which the first message carries a specified timer and a specified number threshold, and is used for determining whether a continuous LBT failure is triggered on a sidelink sending resource of a shared frequency.

As a possible implementation of the embodiments of the present disclosure, there is at least one specified timer corresponding to at least one shared frequency, and there is at least one specified number threshold corresponding to the at least one shared frequency. There is at least one specified timer corresponding to at least one destination address identification, and there is at least one specified number threshold corresponding to the at least one destination address identification.

As a possible implementation of the embodiments of the present disclosure, the transceiver unit 1110 is further configured to receive a failure indication reported by the terminal, in which the failure indication is used for indicating that the continuous LBT failure is triggered.

As a possible implementation of the embodiments of the present disclosure, the method further includes: scheduling a backup sidelink sending resource to the terminal according to the failure indication, in which the backup sidelink sending resource is a sidelink sending resource of the shared frequency, or a sidelink sending resource of a non-shared frequency.

As a possible implementation of the embodiments of the present disclosure, the failure indication includes: a first shared frequency of a sidelink sending resource of a shared frequency on which the continuous LBT failure is triggered; or the failure indication includes a first destination address identification, in which the continuous LBT failure is triggered by a sidelink communication with the first destination address identification.

The sidelink communication apparatus of this embodiment of the present disclosure is applied to the network device. By sending the first message to the terminal, in which the first message carries the specified timer and the specified number threshold, and is used for determining whether the continuous LBT failure is triggered on the sidelink sending resource of the shared frequency, the terminal can send data in the timely manner when the LBT fails, thus avoiding data loss and increasing communication reliability.

Corresponding to the sidelink communication method provided by the embodiment with reference to FIG. 9, the present disclosure further provides a sidelink communication apparatus. As the sidelink communication apparatus provided by the embodiment of the present disclosure corresponds to the sidelink communication method provided by the embodiment with reference to FIG. 9, the implementation of the sidelink communication method is also applicable to the sidelink communication apparatus provided by this embodiment of the present disclosure, which is no longer described in detail in this embodiment of the present disclosure.

FIG. 12 is a schematic block diagram of another sidelink communication apparatus provided by an embodiment of the present disclosure. The sidelink communication apparatus may be applied to a destination terminal.

As illustrated in FIG. 12, the sidelink communication apparatus 1200 includes: a transceiver unit 1210.

The transceiver unit 1210 is configured to receive a failure indication sent by a terminal, in which the failure indication includes a first destination address identification, and a continuous LBT failure is triggered by a sidelink communication with the first destination address identification.

As a possible implementation of the embodiments of the present disclosure, reception of a sidelink message from the terminal on a sidelink sending resource of a shared frequency where the continuous LBT failure occurs is stopped according to the failure indication; or a sidelink message is received according to the failure indication from the terminal on a backup sidelink sending resource in response to presence of the backup sidelink sending resource.

As a possible implementation of the embodiments of the present disclosure, the transceiver unit 1210 is further configured to receive a sidelink RRC message from the terminal, in which the sidelink RRC message carries the failure indication; or receive a sidelink MAC CE message sent by the terminal, in which the sidelink MAC CE message carries the failure indication.

In order to implement the above embodiments, the present disclosure further provides a sidelink communication apparatus, including a processor and a memory. The memory has a computer program stored therein, and the processor executes the computer program stored in the memory, to enable the apparatus to implement the sidelink communication methods described in the embodiments of FIGs. 2-6.

In order to implement the above embodiments, the present disclosure further provides another sidelink communication apparatus, including a processor and a memory. The memory has a computer program stored therein, and the processor executes the computer program stored in the memory, to enable the apparatus to implement the sidelink communication methods described in the embodiments of FIGs. 7-8.

In order to implement the above embodiments, the present disclosure further provides another sidelink communication apparatus, including a processor and a memory. The memory has a computer program stored therein, and the processor executes the computer program stored in the memory, to enable the apparatus to implement the sidelink communication method described in the embodiment of FIG. 9.

In order to implement the above embodiments, the present disclosure further provides a sidelink communication method, including: a processor and an interface circuit. The interface circuit is used for receiving a code instruction and transmitting the code instruction to the processor; and the processor is used for running the code instruction, to implement the methods described in the embodiments in FIGs. 2-6.

In order to implement the above embodiments, the present disclosure further provides another sidelink communication method, including: a processor and an interface circuit. The interface circuit is used for receiving a code instruction and transmitting the code instruction to the processor; and the processor is used for running the code instruction, to implement the methods described in the embodiments in FIGs. 7-8.

In order to implement the above embodiments, the present disclosure further provides another sidelink communication method, including: a processor and an interface circuit. The interface circuit is used for receiving a code instruction and transmitting the code instruction to the processor; and the processor is used for running the code instruction, to implement the method described in the embodiment in FIG. 9.

In order to implement the above embodiments, the present disclosure provides a computer readable storage medium, in which an instruction is stored; and when the instruction is executed, the sidelink communication methods described in the embodiments in FIGs. 2-6 are implemented.

In order to implement the above embodiments, the present disclosure provides another computer readable storage medium, in which an instruction is stored; and when the instruction is executed, the sidelink communication methods described in the embodiments in FIGs. 7-8 are implemented.

In order to implement the above embodiments, the present disclosure provides another computer readable storage medium, in which an instruction is stored; and when the instruction is executed, the sidelink communication method described in the embodiment in FIG. 9 is implemented.

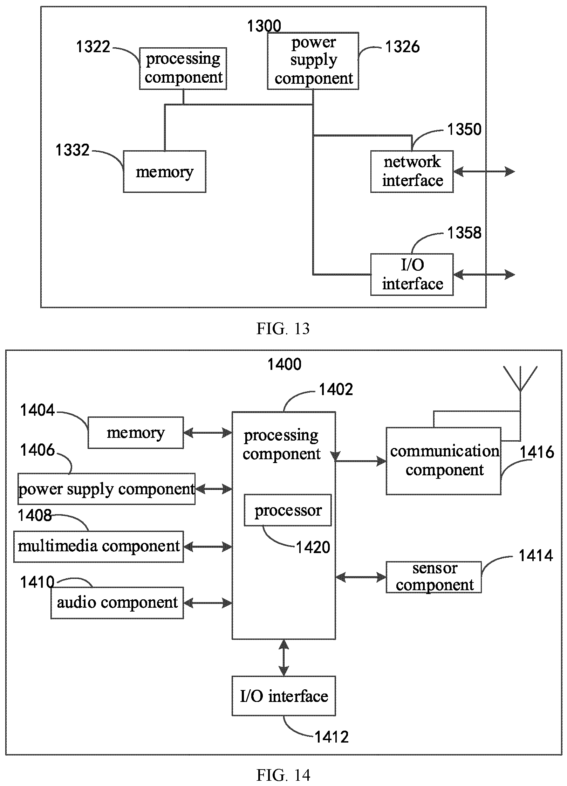

As illustrated in FIG. 13, FIG. 13 is a schematic block diagram of a network device provided by an embodiment of the present disclosure. Referring to FIG. 13, the network device 1300 includes a processing component 1322, which further includes at least one processor, and a memory resource represented by a memory 1332, which is used for storing an instruction executable by the processing component 1322, such as an application. The application stored in the memory 1332 may include one or more modul es that each corresponds to a set of instructions. In addition, the processing component 1322 is configured to execute the instruction, to implement any method applied to the network device of the above methods, such as the methods shown in FIGs. 7-8.

The network device 1300 may further include a power supply component 1326 configured to execute power management of the network device 1300, a wired or wireless network interface 1350 configured to connect the network device 1300 to a network, and an input/output (I/O) interface 1358. The network device 1300 may operate based on an operating system stored in the memory 1332, such as Windows Server TM, Mac OS XTM, UnixTM, LinuxTM or FreeBSDTM.

FIG. 14 is a block diagram of a terminal provided by an embodiment of the present disclosure. For example, the terminal 1400 may be a mobile phone, a computer, a digital broadcast user equipment, a messaging device, a game console, a tablet device, a medical device, a fitness device, a personal digital assistant, etc.

As illustrated in FIG. 14, the terminal 1400 may include at least one of the following components: a processing component 1402, a memory 1404, a power supply component 1406, a multimedia component 1408, an audio component 1410, an input/output (I/O) interface 1412, a sensor component 1414, and a communication component 1416.

The processing component 1402 typically controls overall operations of the terminal 1400, such as the operations associated with display, telephone calls, data communications, camera operations, and recording operations. The processing component 1402 may include one or more processors 1420 to perform all or part of the steps in the above described method. Moreover, the processing component 1402 may include one or more modules which facilitate the interaction between the processing component 1402 and other components. For example, the processing component 1402 may include a multimedia module to facilitate the interaction between the multimedia component 1408 and the processing component 1402.

The memory 1404 is configured to store various types of data to support the operation of the terminal 1400. Examples of such data include instructions for any applications or methods operated on the terminal 1400, contact data, phonebook data, messages, pictures, video, etc. The memory 1404 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1406 provides power to various components of the terminal 1400. The power component 1406 may include a power management system, one or more power sources, and any other components associated with the generation, management, and distribution of power in the terminal 1400.

The multimedia component 1408 includes a screen providing an output interface between the terminal 1400 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 1408 includes a front-facing camera and/or a rear-facing camera. When the terminal 1400 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1410 is configured to output and/or input audio signals. For example, the audio component 1410 includes a microphone (MIC) configured to receive an external audio signal when the terminal 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide status assessments of various aspects of the terminal 1400. For instance, the sensor component 1414 may detect an open/closed status of the terminal 1400, relative positioning of components, e.g., the display and the keypad, of the terminal 1400, a change in position of the terminal 1400 or a component of the terminal 1400, a presence or absence of user contact with the terminal 1400, an orientation or an acceleration/deceleration of the terminal 1400, and a change in temperature of the terminal 1400. The sensor component 1414 may include a proximity sensor configured to detect the presence of nearby objects without any physical contact. The sensor component 1414 may also include a light sensor, such as a Complementary Metal Oxide Semiconductor (CMOS) or Charge-Coupled Device (CCD) image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the terminal 1400 and other devices. The terminal 1400 can access a wireless network based on a communication standard, such as Wi-Fi, 2G or 3G, or a combination thereof. In an embodiment, the communication component 1416 receives a broadcast signal or broadcast associated information from an external broadcast management system via a broadcast channel. In an embodiment, the communication component 1416 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some embodiments, the terminal 1400 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods described with reference to FIG. 2 to FIG. 5.

In some embodiments, there is also provided a non-transitory computer readable storage medium including executable instructions, such as the memory 1404, executable by the processor 1420 in the terminal 1400, for performing the above methods described with reference to FIG. 2 to FIG. 6 or the above method described with reference to FIG. 9. For example, the non-transitory computer-readable storage medium may be a ROM, a Random Access Memory (RAM), a CD-ROM, a magnetic tape, a floppy disc, and an optical data storage device.

Other embodiments of the invention will be apparent to those skilled in the art from consideration of the specification and practice of the invention disclosed here. This application is intended to cover any variations, uses, or adaptations of the invention following the general principles thereof and including such departures from the invention as come within known or customary practice in the art. It is intended that the specification and examples be considered as illustrative only, with a true scope of the invention being indicated by the following claims.

It will be appreciated that the invention is not limited to the exact construction that has been described above and illustrated in the accompanying drawings, and that various modifications and changes can be made without departing from the scope thereof. It is intended that the scope of the invention only be limited by the appended claims.

In order to implement the above-mentioned embodiments, the embodiment of the present disclosure further provides a communication apparatus. The communication apparatus may be a network device, may be a user equipment, may be a chip, a chip system, a processor or the like that supports the network device to implement the above methods, and may also be a chip, chip system, processor, or the like that supports the user equipment to implement the above methods. The apparatus may be used for implementing the method described in any one of the above method embodiments, which may specifically refer to the descriptions in the embodiments of the above methods.

The communication apparatus may include one or more processors. The processor may be a general purpose processor or a dedicated processor, such as, a baseband processor or a central processor. The baseband processor is used for processing communication protocols and communication data. The central processor is used for controlling the communication apparatus (e.g., base station, baseband chip, UE, UE chip, central unit (CU) or distributed unit (DU)), executing computer programs, and processing data of the computer programs.

Optionally, the communication apparatus may further include one or more memories, on which a computer program may be stored; and the processor executes the computer program, to enable the communication apparatus to implement the methods described in the above method embodiments. Optionally, the memory may also store data therein. The communication apparatus and the memory may be set separately or integrated together.

Optionally, the communication apparatus may further include a transceiver and an antenna. The transceiver may be called a transceiver unit, a transceiver machine, or a transceiver circuit, etc., for achieving a transceiver function. The transceiver may include a receiver and a transmitter. The receiver may be called a receiving machine or a receiving circuit, etc., for achieving a receiving function; and the transmitter may be called a transmitting machine or a transmitting circuit, etc., for achieving a transmitting function.

Optionally, the communication apparatus may further include one or more interface circuits. The interface circuit is used for receiving a code instruction and transmitting the code instruction to the processor. The processor executes the code instruction, to enable the communication apparatus to implement the method described in any one of the method embodiments.

In an implementation, the processor may include a transceiver for implementing the receiving and transmitting functions. For example, the transceiver may be the transceiver circuit, or an interface, or the interface circuit. The transceiver circuit, the interface or the interface circuit used for achieving the receiving and transmitting functions may be separated or integrated together. The above transceiver circuit, interface or interface circuit may be used for code/data reading and writing, or the above transceiver circuit, interface or interface circuit may be used for signal transmission or transfer.

In an implementation mode, the processor may have a computer program, and the computer program is running on the processor, which enables the communication apparatus to execute the method described in any one of the above method embodiments. The computer program may be solidified in the processor. In this case, the processor may be implemented by hardware.

In an implementation mode, the communication apparatus may include a circuit capable of achieving the transmitting, receiving or communication function in the forgoing method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the description of the above embodiments may be a network device or a terminal, but the scope of the communication apparatus described in the disclosure is not limited thereto. The communication apparatus may be a stand-alone device or may be part of a larger device. For example, the described communication apparatus may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For a case where the communication apparatus may be the chip or the chip system, the chip can include a processor and an interface, in which there may be one or more processors and a plurality of interfaces.

Optionally, the chip further includes a memory used for storing necessary computer programs and data.

Those skilled in the art may further learn that various illustrative logical blocks and steps listed in the embodiments of the present disclosure may be implemented through electronic hardware, computer software, or a combination of the two. Whether such function is implemented through the hardware or the software depends on particular application and design requirements for the entire system. Those skilled in the art may use various methods to implement the described functions for each particular application, but such implementation should not be considered to be beyond the scope of the embodiments of the present disclosure.

The present disclosure further provides a computer program product, which, when being executed by the computer, achieves the functions of the embodiments in FIGs. 2-6.

The present disclosure further provides a computer program product, which, when being executed by the computer, achieves the functions of the embodiments in FIGs. 7-8.

The present disclosure further provides a computer program product, which, when being executed by the computer, achieves the function of the embodiment in FIG. 9.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server or a data center that includes one or more available mediums. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art can understand that the first, second, and other various numerical numbers involved in the disclosure are only used for the convenience of description, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A sidelink communication method, performed by a terminal, the method comprising:
determining whether a continuous listen before talk (LBT) failure is triggered on a sidelink sending resource of a shared frequency; and
in response to the continuous LBT failure being triggered, reporting a failure indication to a network device or determining a backup sidelink sending resource for sending a sidelink message.

2. The method according to claim 1, wherein determining whether the continuous LBT failure is triggered on the sidelink sending resource of the shared frequency comprises:
in response to a number of LBT failures on the sidelink sending resource of the shared frequency being greater than or equal to a specified number threshold, determining that the continuous LBT failure is triggered on the sidelink sending resource of the shared frequency.

3. The method according to claim 2, wherein determining the number of LBT failures on the sidelink sending resource of the shared frequency comprises:
in response to timeout of a specified timer, resetting a current number of LBT failures to zero and stopping the specified timer; and
in response to the LBT failure occurring on the sidelink sending resource of the shared frequency, starting or restarting the specified timer and adding the current number of LBT failures by 1.

4. The method according to claim 2, wherein before determining whether the continuous LBT failure is triggered on the sidelink sending resource of the shared frequency, the method further comprises:
receiving a first radio resource control (RRC) message from the network device, wherein the first RRC message carries a specified timer and the specified number threshold, and the specified timer is configured to reset the number of LBT failures in response to timeout of the specified timer.

5. The method according to claim 1, wherein determining whether the continuous LBT failure is triggered on the sidelink sending resource of the shared frequency comprises:
in response to a first shared frequency existing in at least one shared frequency, determining that the continuous LBT failure is triggered on a sidelink sending resource of the first shared frequency;
wherein, on the sidelink sending resource of the first shared frequency, a number of LBT failures corresponding to the first shared frequency is greater than or equal to a specified number threshold corresponding to the first shared frequency.

6. The method according to claim 5, wherein before determining whether the continuous LBT failure is triggered on the sidelink sending resource of the shared frequency, the method further comprises:
receiving a second RRC message from the network device, wherein the second RRC message carries a specified timer corresponding to the at least one shared frequency, and a specified number threshold corresponding to the at least one shared frequency; and the specified timer is configured to reset the number of LBT failures corresponding to the shared frequency in response to timeout of the specified timer;
wherein the at least one shared frequency corresponds to the same specified timer or different specified timers; and the at least one shared frequency corresponds to the same specified number threshold or different specified number thresholds.

7. The method according to claim 1, wherein determining whether the continuous LBT failure is triggered on the sidelink sending resource of the shared frequency comprises:
in response to a first destination address identification existing in at least one destination address identification for a sidelink communication on a sidelink sending resource of at least one shared frequency, determining that the continuous LBT failure is triggered by a sidelink communication with a first destination address identification;
wherein, on a sidelink sending resource of a shared frequency for the sidelink communication with the first destination address identification, a number of LBT failures corresponding to the first destination address identification is greater than or equal to a specified number threshold corresponding to the first destination address identification.

8. The method according to claim 7, wherein before determining whether the continuous LBT failure is triggered on the sidelink sending resource of the shared frequency, the method further comprises:
receiving a third RRC message from the network device, wherein the third RRC message carries a specified timer corresponding to the at least one destination address identification, and a specified number threshold corresponding to the at least one destination address identification; and the specified timer is configured to reset a number of LBT failures corresponding to the destination address identification in response to timeout of the specified timer;
or,
receiving a first sidelink RRC message from a destination terminal corresponding to the at least one destination address identification, wherein the first sidelink RRC message carries a specified timer corresponding to the destination address identification, and a specified number threshold corresponding to the destination address identification;
wherein the at least one destination address identification corresponds to the same specified timer or different specified timers; and the at least one destination address identification corresponds to the same specified number threshold or different specified number thresholds.

9. The method according to claim 1 or 2, wherein in response to the continuous LBT failure being triggered, reporting the failure indication to the network device, comprises:
in response to the continuous LBT failure being triggered, reporting a first failure indication to the network device.

10. The method according to claim 1 or 2, wherein in response to the continuous LBT failure being triggered, determining the backup sidelink sending resource for sending the sidelink message, comprises:
in response to the continuous LBT failure being triggered, selecting the backup sidelink sending resource from at least one configured candidate sidelink sending resource.

11. The method according to claim 1 or 5, wherein in response to the continuous LBT failure being triggered, reporting the failure indication to the network device, comprises:
in response to the continuous LBT failure being triggered on a sidelink sending resource of a first shared frequency, reporting a second failure indication carrying the first shared frequency to the network device;
wherein, on the sidelink sending resource of the first shared frequency, a number of LBT failures corresponding to the first shared frequency is greater than or equal to a specified number threshold corresponding to the first shared frequency.

12. The method according to claim 1 or 5, wherein in response to the continuous LBT failure being triggered, determining the backup sidelink sending resource for sending the sidelink message, comprises:
in response to the continuous LBT failure being triggered on a sidelink sending resource of a first shared frequency, selecting a candidate sidelink sending resource of the shared frequency or a candidate sidelink sending resource of a non-shared frequency from at least one configured candidate sidelink sending resource as the backup sidelink sending resource;
wherein, on the sidelink sending resource of the first shared frequency, a number of LBT failures corresponding to the first shared frequency is greater than or equal to a specified number threshold corresponding to the first shared frequency.

13. The method according to claim 1 or 7, wherein in response to the continuous LBT failure being triggered, reporting the failure indication to the network device, comprises:
in response to the continuous LBT failure being triggered by a sidelink communication with a first destination address identification, reporting a third failure indication carrying the first destination address identification to the network device;
wherein, on a sidelink sending resource of a shared frequency for the sidelink communication with the first destination address identification, a number of LBT failures corresponding to the first destination address identification is greater than or equal to a specified number threshold corresponding to the first destination address identification.

14. The method according to claim 1 or 7, wherein in response to the continuous LBT failure being triggered, determining the backup sidelink sending resource for sending the sidelink message, comprises:
in response to the continuous LBT failure being triggered by a sidelink communication with a first destination address identification, selecting a candidate sidelink sending resource of the shared frequency or a candidate sidelink sending resource of a non-shared frequency from at least one configured candidate sidelink sending resource as the backup sidelink sending resource;
wherein, on a sidelink sending resource of a shared frequency for the sidelink communication with the first destination address identification, a number of LBT failures corresponding to the first destination address identification is greater than or equal to a specified number threshold corresponding to the first destination address identification.

15. The method according to claim 10 or 12 or 14, further comprising:
receiving a fourth RRC message from the network device, wherein the fourth RRC message carries the candidate sidelink sending resource;
or,
receiving a second sidelink RRC message from a destination terminal corresponding to at least one destination address identification, wherein the second sidelink RRC message carries the candidate sidelink sending resource message.

16. The method according to claim 1 or 7, further comprising:
in response to the continuous LBT failure being triggered by a sidelink communication with a first destination address identification, sending a fourth failure indication to a destination terminal corresponding to the first destination address identification;
wherein, on a sidelink sending resource of a shared frequency for the sidelink communication with the first destination address identification, a number of LBT failures corresponding to the first destination address identification is greater than or equal to a specified number threshold corresponding to the first destination address identification.

17. The method according to claim 16, wherein
the fourth failure indication is used for instructing the destination terminal to stop receiving the sidelink message from the terminal on a sidelink sending resource of a shared frequency where the continuous LBT failure occurs;
or,
the fourth failure indication is used for instructing to receive the sidelink message on the backup sidelink sending resource in response to presence of the backup sidelink sending resource.

18. The method according to claim 16, wherein the fourth failure indication further carries a second shared frequency;
wherein, in the sidelink sending resource of the at least one shared frequency used for the sidelink communication with the first destination address identification, the continuous LBT failure is triggered on a sidelink sending resource of the second shared frequency.

19. The method according to claim 16, wherein sending the fourth failure indication to the destination terminal corresponding to the first destination address identification comprises:
sending a third sidelink RRC message to the destination terminal corresponding to the first destination address identification, wherein the third sidelink RRC message carries the fourth failure indication;
or,
sending a sidelink media access control (MAC) control element (CE) message to the destination terminal corresponding to the first destination address identification, wherein the sidelink MAC CE message carries the fourth failure indication.

20. A sidelink communication method, performed by a network device, the method comprising:
sending a first message to a terminal;
wherein the first message carries a specified timer and a specified number threshold, and is used for determining whether a continuous listen before talk (LBT) failure is triggered on a sidelink sending resource of a shared frequency.

21. The method according to claim 20, wherein
there is at least one specified timer corresponding to at least one shared frequency; and there is at least one specified number threshold corresponding to the at least one shared frequency;
or,
there is at least one specified timer corresponding to at least one destination address identification; and there is at least one specified number threshold corresponding to the at least one destination address identification.

22. The method according to claim 20 or 21, further comprising:
receiving a failure indication reported by the terminal, wherein the failure indication is configured for indicating that the continuous LBT failure is triggered.

23. The method according to claim 22, further comprising:
scheduling a backup sidelink sending resource to the terminal according to the failure indication;
wherein the backup sidelink sending resource is a sidelink sending resource of the shared frequency, or a sidelink sending resource of a non-shared frequency.

24. The method according to claim 22, wherein,
the failure indication comprises a first shared frequency of a sidelink sending resource of a shared frequency on which the continuous LBT failure is triggered;
or,
the failure indication comprises a first destination address identification, wherein the continuous LBT failure is triggered by a sidelink communication with the first destination address identification.

25. A sidelink communication method, performed by a destination terminal, the method comprising:
receiving a failure indication sent by a terminal, wherein the failure indication comprises a first destination address identification, wherein a continuous listen before talk (LBT) failure is triggered by a sidelink communication with the first destination address identification.

26. The method according to claim 25, further comprising:
stopping, according to the failure indication, receiving a sidelink message from the terminal on a sidelink sending resource of a shared frequency where the continuous LBT failure occurs;
or,
receiving, according to the failure indication, a sidelink message from the terminal on a backup sidelink sending resource in response to presence of the backup sidelink sending resource.

27. The method according to claim 25, wherein receiving the failure indication sent by the terminal comprises:
receiving a sidelink RRC message from the terminal, wherein the sidelink RRC message carries the failure indication;
or,
receiving a sidelink media access control (MAC) control element (CE) message sent by the terminal, wherein the sidelink MAC CE message carries the failure indication.

28. A sidelink communication apparatus, comprising a processor and a memory, wherein the memory has a computer program stored therein; and the processor executes the computer program stored in the memory, to enable the apparatus to implement the method according to any one of claims 1-19.

29. A sidelink communication apparatus, comprising a processor and a memory, wherein the memory has a computer program stored therein; and the processor executes the computer program stored in the memory, to enable the apparatus to implement the method according to any one of claims 20-24.

30. A sidelink communication apparatus, comprising a processor and a memory, wherein the memory has a computer program stored therein; and the processor executes the computer program stored in the memory, to enable the apparatus to implement the method according to any one of claims 25-27.
